# EUROPEAN PATENT APPLICATION

(11) **EP 3 416 118 A1**
(43) Date of publication of application: **19.12.2018**
(21) Application number: 17305711.8
(22) Date of filing: 12.06.2017
(51) Int. Cl.: G06Q 20/32, G06Q 20/38

(54) **METHOD OF CONTROLLING COMPLIANCE BETWEEN A PAYMENT KEY AND A CARDHOLDER VERIFICATION METHOD**

(71) Applicant: GEMALTO SA, 92190 Meudon (FR)
(72) Inventor: BELLET, François, 13881 Gemenos Cedex (FR); BOURACHOT, Pascal, 13881 Gemenos Cedex (FR); AFFOUARD, Baptiste, 13881 Gemenos Cedex (FR)

(57) **Abstract**

The invention is a method for controlling that a payment key (41) used in a payment transaction is compliant with a cardholder verification method (71). The method comprises the steps of:
- receiving at a server (30) transaction data (80) reflecting the payment transaction, said transaction data including an amount (81), a cryptogram (82) computed using said payment key and a seed (51) used to derive said payment key,
- identifying a key index (61) from a risk parameter extracted from said transaction data or specific to previous payment transactions, said key index reflecting said cardholder verification method, and
- checking that said key index and said seed are linked by a predefined mathematical function.

## Description

### (Field of the invention)

The present invention relates to methods of controlling the compliance of a payment key with a cardholder verification method (CVM). It relates particularly to methods of checking that a payment key used in a payment transaction complies with a CVM defined by a security policy.

### (Background of the invention)

A framework has been defined - called Host card emulation (HCE) - that enables NFC devices (like smartphones) to perform contactless transactions in card emulation mode even if the used credentials are stored in a software application running with the operating system (OS) of the NFC device. In other word, HCE opens up the possibility of storing a virtual contactless card application as a service running on the NFC device operating system. This option is supported by several operating systems like Android © OS v4.4 and upper and BlackBerry © OS. Thanks to HCE framework, a NFC controller can route communication from a contactless reader or POS (Point-Of-Sale) terminal to an HCE service on the NFC device's host CPU.

Existing HCE (Host Card Emulation) tokenization platforms and transaction managers manage one cardholder verification method only. The EMV session key which is used to compute the payment cryptogram is derived from a (card) master key and then protected by the cardholder credential associated with the cardholder verification method. The mobile PIN is an example of cardholder credential. A cloud based payment server stores the cardholder credential and uses it to protect the session keys, for instance by encrypting the session key with a password based key derivation algorithm. When the end-user makes a payment, he enters his credential and the mobile payment application unprotects the session key (i.e. payment key) in order to compute the payment cryptogram. Thus it forces the end-user to enter his cardholder credential for every payment transaction. This scheme provides a poor end-user experience especially on low end devices which are not equipped with fingerprint reader. On these devices, it may be desirable to restrict cardholder verification method to high value payment only for example.

There is a need to provide a way to manage multiple cardholder verification methods without altering the digital card issuance and payment verification process and without removing the protection mechanism for the payment keys associated with the cardholder verification method.

### (Summary of the Invention)

An object of the invention is to solve the above mentioned technical problem.

An object of the present invention is a method for controlling that a payment key used in a payment transaction is compliant with a cardholder verification method. The method comprises the steps of:
- receiving at a server transaction data reflecting the payment transaction, the transaction data including an amount, a cryptogram computed using the payment key and a seed used to derive the payment key,
- identifying a key index from a risk parameter extracted from said transaction data or specific to previous payment transactions, the key index reflecting said cardholder verification method,
- checking that said key index and said seed are linked by a predefined mathematical function.

Advantageously, the payment key may belong to a keyset comprising a preset number of payment keys and the predefined mathematical function may be "seed modulo preset number is equal to key index".

Advantageously, the risk parameter may be based on one of the following items: an amount, a cumulated amount of the previous payment transactions, a cumulated number of the payment transactions or a duration since a strong cardholder verification method was last used.

Another object of the present invention is a method for generating a keyset comprising a preset number of payment keys. The method comprises the following step:
- for each payment key of the keyset, identifying a key index uniquely allocated to a cardholder verification method, initializing a seed so that the key index and the seed are linked by a predefined mathematical function, and deriving the payment key from the seed.

Advantageously, the predefined mathematical function may be "seed modulo preset number is equal to key index".

Advantageously, the seed may be a counter.

Another object of the present invention is a method for selecting a payment key to be used in a payment transaction. The method comprises the steps of:
- sending to a server transaction data reflecting the payment transaction, the transaction data including an amount, a cryptogram computed using the payment key and a seed used to derive the payment key,
- identifying a key index from a risk parameter extracted from said transaction data or specific to previous payment transactions, the key index reflecting the cardholder verification method, and
- selecting, in a keyset comprising a preset number of payment keys, the payment key corresponding to the key index, the payment key having been computed from a seed which is linked to so said key index by a predefined mathematical function.

Another object of the present invention is a checking server including an Operating System, a Central Processing Unit and a storage area. The checking server is adapted to receive transaction data reflecting a payment transaction, the transaction data including an amount, a cryptogram computed using a payment key and a seed used to derive a payment key. The checking server contains an identifier software agent designed to be executed by the Central Processing Unit for identifying a key index from a risk parameter extracted from the transaction data or specific to previous payment transactions, the key index reflecting a cardholder verification method. The checking server contains a verifier software agent designed to be executed by the Central Processing Unit for checking that the key index and the seed are linked by a predefined mathematical function. The verifier software agent is configured to consider the payment key used in a payment transaction is compliant with a cardholder verification method in case of successful checking.

Advantageously, the payment key may belong to a keyset comprising a preset number of payment keys and the predefined mathematical function may be "seed modulo preset number is equal to key index".

Advantageously, the checking server may contain an authenticator software agent designed to be executed by the Central Processing Unit for authenticating the cryptogram using the payment key.

Another object of the present invention is a generator server including an Operating System, a Central Processing Unit and a storage area. The generator server is adapted for generating a keyset comprising a preset number of payment keys. The generator server contains a generating software agent designed to be executed by the Central Processing Unit for generating each payment key of the keyset by identifying a key index uniquely allocated to a cardholder verification method, initializing a seed so that the key index and the seed are linked by a predefined mathematical function, and deriving the payment key from the seed.

Another object of the present invention is a payment device including an Operating System, a Central Processing Unit, a storage area and a software payment application. The payment device includes a keyset comprising a preset number of payment keys. The software payment application is configured to generate transaction data reflecting a payment transaction, the transaction data including an amount, a seed and a cryptogram computed from a target payment key. The software payment application is designed to be executed by the Central Processing Unit for identifying a key index from a risk parameter relating to either said transaction data or to previous payment transactions. The software payment application is designed to select a key index reflecting a cardholder verification method, and for selecting as target payment key a payment ley corresponding to the key index in the keyset. The payment key has been derived from a seed and the key index and the seed are linked by a predefined mathematical function.

Advantageously, the predefined mathematical function may be "seed modulo preset number is equal to key index".

Advantageously, the payment device may include a host card emulation framework and the software payment application may be a HCE application.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts an example of a flowchart for controlling compliance between a payment key and a CVM according to the invention,
- Figure 2 depicts schematically an example of architecture of a generator server according to the invention;
- Figure 3 depicts schematically an example of architecture of a payment device according to the invention;
- Figure 4 depicts schematically an example of architecture of a checking server according to the invention; and
- Figure 5 depicts the link between CVMs and payment keys of a keyset according to an example of the invention.

### (Detailed description of the preferred embodiments)

The invention may apply to all kinds of contactless payment with a software mobile payment application relying on the HCE cloud based payment technology wherein a mobile payment application applies multiple cardholder verification methods. These HCE devices may be smart-watches, mobile phones, tablets or any HCE-enabled computers. It may also apply to payment devices devoid of HCE framework.

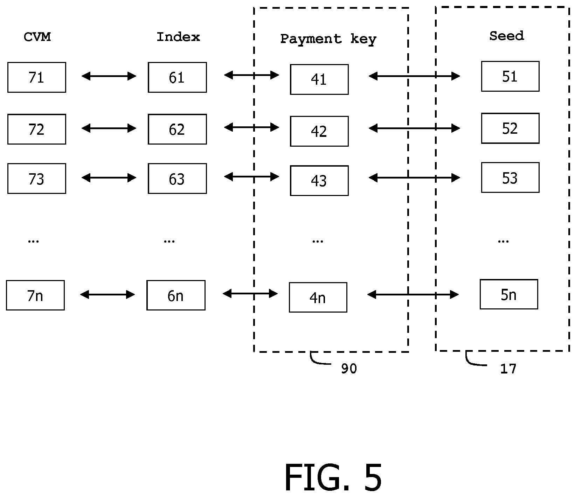

**Figure 5** shows schematically the link between CVMs and payment keys of a keyset 90 according to an example of the invention.

In the context of cloud based payment (CBP), the EMV session keys are derived by the cloud based payment server and then sent to the mobile payment application. EMV session keys are called limited use keys or single use keys. For single use keys, the session key diversifier (i.e. seed) changes for each transaction whereas limited use keys use the same diversifier for several transactions and the change of diversifier is based on more complex rules such as the cumulated amount of previous payment transactions or an expiration period.

The cloud based payment server can also protect the session keys with a cardholder credential to provide additional security for the session keys that will be stored in the CBP mobile payment application (MPA) that may lack security mechanism usually provided by secure elements, smartcards or trusted execution environments.

The session keys are therefore pre-computed and sent to the mobile payment application for later use. At the time of the payment transaction, the cloud based payment server is not involved and so it cannot generate the session key on the fly.

When a payment transaction is carried out, the diversifier (i.e. seed) value appears in the payment transaction data sent on the payment network. The diversifier can therefore be retrieved by the transaction manager server when notified of a payment transaction.

According to an aspect of the invention, each seed (i.e. key diversifier) is initialized with a specific value which is allocated to a unique cardholder verification method. More precisely, in a keyset, each key index of the key generated from a seed is linked to this seed by a predefined mathematical function.

Assuming there are n different CVM defined as CVM 71 to CVM 7n, the seed value reserved for CVM k preferably satisfies the equation (seed modulo n) = k.

Preferably, when a replenishment of payment keys occurs in a payment device, the CBP server derives a set of m payment keys where m is a multiple of n. In other words, the CBP server generates m keysets of n payment keys.

In one embodiment, the seed (i.e. diversifier) used to derive a payment key is increased by one for each payment key and the initial seed defined as Seed0 verifies equation (Seed0 modulo n) = 0.

As shown at Figure 5, the keyset 90 comprises n payment keys 41, 42, to 4n which are referenced by as many indexes 61, 62, ..., 6n.

Each of the payment keys 41, 42, to 4n has been generated from a seed among a set 17 of seeds 51, 52, to 5n.

According to an aspect of the invention, a role is uniquely allocated to each payment key. In other words, a role assignment rule (RAR) specifies the association between CVM and key index.

Each of the payment keys 41, 42, to 4n is uniquely allocated to one CVM belonging to the set of CVMs 71, 72, to 7n.

Hence, thanks to the link between seed and index and the link between CVM and index, there is a unique allocation between a CVM and a payment key (taking into account the implicit link between index and payment key).

In one embodiment, the key set 90 comprises only two keys: one corresponding to a first CVM for transactions with low risk and a second CVM for transactions with high risk. For instance, the first CVM might be not to ask any user authentication if the amount of the transaction is lower than 20 Euros while the second CVM might be to ask the user to enter his PIN if the amount of the transaction is equal to or higher than 20 Euros.

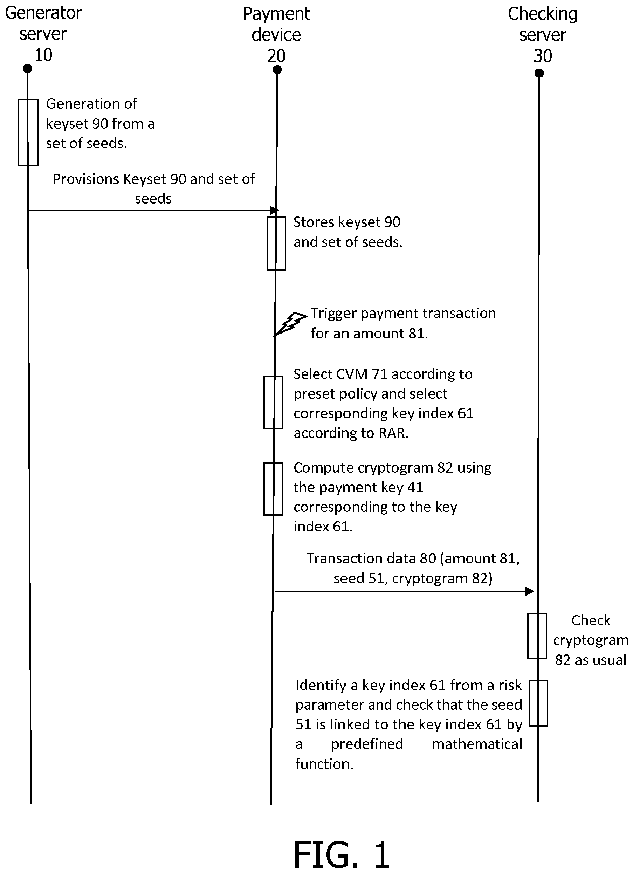

**Figure 1** shows schematically an example of a flowchart for controlling compliance between a payment key and a card holder verification method (CVM) according to the invention.

First a generator server 10 (also called CBP server) identifies a set of n seeds and generates a keyset 90 comprising n payment keys by using the set of seeds. The generator server 10 can be a computer machine connected to a network.

Then the generator server 10 sends both the set of seeds and the keyset 90 to a payment device 20. The payment device 20 can be a smartphone which receives the keyset 90 through Over-The-Air (OTA) channel for instance.

The payment device 20 stores the received set of seeds and the keyset 90 into its non-volatile memory. Several keysets can be generated then provisioned into the payment device 20.

Alternatively, instead of sending the whole set of seeds, only the initial seed can be sent and the other seeds can be re-computed by the payment device 20 by applying a predefined function. For example, the "seed k+1" = 1 + "seed k", or "seed k+1" = 2 x "seed k". In other examples, the value of the seeds can be managed as a counter with any increment higher than 1.

The payment device 20 is assumed to have been provisioned with a preset security policy comprising rules for selecting a CVM when a transaction is going to be performed. Typically a rule specifies a type of CVM and a condition to be met.

The security policy is based on the assessment of a risk parameter which can be extracted from transaction data computed by the payment device 20 or which may depends on previous payment transactions.

For instance, the risk parameter can be the amount of the transaction. In another example, the risk parameter can based on historical data. For instance it may be a cumulated amount of a group of previous payment transactions, a cumulated number of payment transactions, a duration since a strong cardholder verification method was last used, or a duration since a last transaction. The risk parameter can also be a combination of the above-listed examples.

When the user of the payment device 20 wants to buy something, he can decide to use the software payment application installed into his payment device 20. This event triggers the payment transaction for an amount 81.

Then the mobile payment application (MPA) identifies the relevant risk parameter according to the preset security policy and identifies the CVM to be applied. Then the MPA selects the key index corresponding to the identified CVM and uses the payment key corresponding to the selected index for computing the transaction cryptogram. Hence for instance, the MPA may identify the CVM 71, selects the key index 61 and uses the payment key 41. Then the MPA can generate a transaction data 80 including the amount 81, the generated transaction cryptogram 82 and the seed 51.

Then the MPA sends the transaction data 80 to a checking server 30 (also called transaction manager server) which is in charge of validating the payment transaction. The checking server 30 verifies the validity of the received cryptogram in a usual way. In case of successful verification, the checking server 30 identifies the relevant risk parameter according to the security policy (assumed to be provisioned into the checking server 30) and identifies the CVM which is supposed to be applied. Then the checking server 30 identifies the key index corresponding to the identified CVM and checks that the received seed and the identified key index are linked by a predefined mathematical function. In case of unsuccessful checking, the checking server 30 can reject the payment transaction.

Alternatively, the checking of the received cryptogram can be performed only in case of successful checking of the mathematical link between the seed and the key index.

It is to be noted that a checking server of the prior art (i.e. devoid of the feature to check the mathematical link between the seed and the index) can still check a transaction cryptogram generated according to the invention.

In a variant, the checking server 30 may be merged with the generator server 10 in a single computer machine.

Preferably, as soon as a payment key is used for a transaction, the whole keyset comprising this payment key is disabled. In other words, if a keyset comprises n payments keys allocated to n different CVMs, only one of these payment keys can be used, the other being permanently deactivated after a payment transaction. A consumed keyset can be removed to save memory (or for security reasons) in the payment device 20.

Although not described in detail, the communications between the various actors are preferably secured by conventional means of managing the confidentiality and integrity.

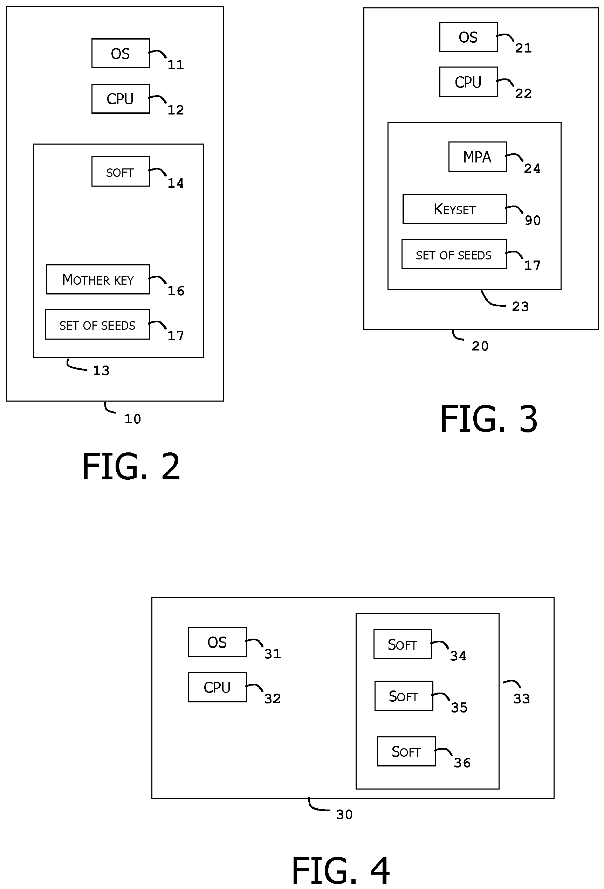

**Figure 2** shows schematically an example of architecture of a generator server 10 according to the invention.

The generator server 10 is a computer including an Operating System 10, a Central Processing Unit (CPU) 12 and a storage area 13 which comprises a non-volatile memory. The storage area 13 contains a, generating software agent 14 and a mother key 16.

The generating software agent 14 is designed to be executed by the CPU 12 for generating a preset number of payment keys of a keyset 90. More precisely, the software agent 14 is designed to identify a key index uniquely allocated to a cardholder verification method, to initialize a seed so that the key index and the seed are linked by a predefined mathematical function, and to derive a payment key from both this seed and the mother key 16.

The generating software agent 14 can be designed to use a pre-provisioned set of seeds 17 to generate the payment keys. Alternatively, the generating software agent 14 can be designed to generate the set of seeds 17 for each generated keyset.

Hence the generator server 10 is adapted to generate a plurality of keysets comprising a preset number of payment keys. It can also generate a several groups of keysets comprising different preset number of payment keys.

Thanks to an aspect of the invention, the generator server 10 needs only one mother key to generate all keys of a keyset of from several keysets.

**Figure 3** shows schematically an example of architecture of a payment device 20 according to the invention.

In this example, the payment device 20 is a smart phone including an Operating System 21, a Central Processing Unit (CPU) 22 and a storage area 23 which comprises a non-volatile memory. The storage area 23 contains a mobile software payment application 24 (MPA), and both a keyset 90 and a set of seeds 17 received from the generator server 10 of the Figure 2. The keyset 90 comprises a preset number of payment keys. In this example the Operating System 21 is Android ®.

The software payment application 24 is designed to generate a transaction data which reflects a payment transaction and which includes an amount, a seed and a cryptogram computed from a selected payment key.

The software payment application 24 is adapted to be executed by the CPU 22 for identifying a key index from a risk parameter relating to the payment transaction. In particular, the risk parameter may be the amount of the transaction or may depend on previous transactions.

The MPA 24 is configured to identify the relevant risk parameter according to the preset security policy and to assess its value. Then the MPA 24 identifies the CVM to be applied according to the value of the risk parameter. The MPA 24 selects the key index corresponding to the identified CVM according to the role assignment rule (RAR). Then the MPA 24 uses the payment key corresponding to the selected index for computing the transaction cryptogram. It is to be noted that the used payment key was previously generated from a seed which is link to the key index by a predefined mathematical function.

In a preferred embodiment, the predefined mathematical function is "seed modulo preset number is equal to key index".

Preferably, the smartphone 20 may include a host card emulation (HCE) framework and the MPA 24 may be a HCE application. The invention is well-suited for HCE-enabled devices and can also apply to non HCE-enabled devices.

The payment device 20 may also be a smart watch, or a portable electronic computer.

**Figure 4** shows schematically an example of architecture of a checking sever 30 according to the invention.

In this example, the checking sever 30 is a server computer including an Operating System 31, a Central Processing Unit (CPU) 32 and a storage area 33 which comprises a non-volatile memory. The checking server 30 is able to receive transaction data which reflect a payment transaction and which include an amount, a transaction cryptogram computed using a payment key, and a seed used to derive the used payment key.

The storage area 33 contains an identifier software agent 34 designed to be executed by the Central Processing Unit 32 for identifying a key index from a risk parameter extracted from the received transaction data or specific to previous payment transactions. More precisely, the identifier software agent 34 is configured to identify the relevant risk parameter according to a preset security policy and to assess the value of the risk parameter. The identifier software agent 34 is also configured to select the relevant CVM to be applied according to the assessed risk parameter. Then the identifier software agent 34 selects the key index corresponding to the identified CVM according to the role assignment rule (RAR).

The storage area 33 contains a verifier software agent 35 designed to be executed by the Central Processing Unit 32 for checking that the selected key index and the seed retrieved from the received transaction data are linked by a predefined mathematical function. The verifier software agent 35 is configured to consider the payment key used in a payment transaction is compliant with a cardholder verification method in case of successful checking. In case of unsuccessful checking, the verifier software agent 35 can be designed to reject the payment transaction and to take any security action targeting the payment device that sent the transaction data.

Preferably, the payment key belongs to a keyset comprising a preset number of payment keys and the verifier software agent 35 is configured to check that the seed and the key index are linked by the following mathematical function: "seed modulo preset number is equal to key index". (i.e. seed mod preset number = key index)

The storage area 33 can contain an authenticator software agent 36 designed to be executed by the Central Processing Unit 32 for authenticating the received cryptogram using the payment key.

Although described as different software agents, the identifier software agent 34, the verifier software agent 35 and the authenticator software agent 36 can be merged in one or two software components.

Thanks to the invention, the checking server can detect that a payment key has been used in a payment transaction without applying the correct Cardholder Verification Method.

An advantage of the invention is to provide a way to manage multiple cardholder verification methods without altering the existing digital card issuance and payment verification process and without removing the protection mechanism for the session keys associated with the cardholder credential of the CVM.

It should be noted that new features of the invention remain compliant with algorithms and flow of existing payment scheme like EMV®. Hence, the new verification method can be implemented on top of the current implementations without change to the existing payment cryptogram verification process of the transaction manager (i.e. checking server). The payment cryptogram is still valid regardless of what session key was used.

It must be understood, within the scope of the invention, that the above-described examples are provided as non-limitative embodiments. In particular, the number of CVMs may be greater than 2 and the payment device may be provisioned with a large number of keysets. Of course, the generator server and the checking server can process operations for a fleet of payment devices.

The invention is not limited to the embodiment of smartphone or Android ®. It applies to all electronic payment devices having a payment application intended to apply a CVM when handling a payment transaction.

## Claims

1. A method for controlling that a payment key (41) used in a payment transaction is compliant with a cardholder verification method (71), said method comprising the step of:
- receiving at a server (30) transaction data (80) reflecting the payment transaction, said transaction data (80) including an amount (81), a cryptogram (82) computed using said payment key (41) and a seed (51) used to derive said payment key (41),
**characterized in that** the method comprises the further steps:
- identifying a key index (61) from a risk parameter extracted from said transaction data (80) or specific to previous payment transactions, said key index (61) reflecting said cardholder verification method (71),
- checking that said key index (61) and said seed (51) are linked by a predefined mathematical function.

2. The method according to claim 1, wherein the payment key (41) belongs to a keyset (90) comprising a preset number of payment keys and wherein the predefined mathematical function is "seed modulo preset number is equal to key index".

3. The method according to claim 1, wherein the risk parameter is based on one of the following items: an amount (81), a cumulated amount of said previous payment transactions, a cumulated number of said payment transactions or a duration since a strong cardholder verification method was last used.

4. A method for generating a keyset (90) comprising a preset number of payment keys (41, 42), **characterized in that** the method comprises the step:
- for each payment key (41, 42) of said keyset (90), identifying a key index (61, 62) uniquely allocated to a cardholder verification method (71, 72), initializing a seed (51, 52) so that said key index (61, 62) and said seed (51, 52) are linked by a predefined mathematical function, and deriving said payment key (41, 42) from said seed (51, 52).

5. The method according to claim 4, wherein the predefined mathematical function is "seed modulo preset number is equal to key index".

6. The method according to claim 2, wherein the seed (51) is a counter.

7. A method for selecting a payment key (41) to be used in a payment transaction, said method comprising the step of:
- sending to a server (30) transaction data (80) reflecting the payment transaction, said transaction data (80) including an amount (81), a cryptogram (82) computed using said payment key (41) and a seed (51) used to derive said payment key (41),
**characterized in that** the method comprises the further steps:
- identifying a key index (61) from a risk parameter extracted from said transaction data (80) or specific to previous payment transactions, said key index (61) reflecting said cardholder verification method (71),
- selecting, in a keyset (90) comprising a preset number of payment keys, the payment key (41) corresponding to said key index (61), said payment key (41) having been computed from a seed (51) which is linked to so said key index (61) by a predefined mathematical function.

8. A checking server (30) including an Operating System (31), a Central Processing Unit (32) and a storage area (33), said checking server (30) being adapted to receive transaction data (80) reflecting a payment transaction, said transaction data (80) including an amount (81), a cryptogram (82) computed using a payment key (41) and a seed (51) used to derive a payment key (41),
**characterized in that** the checking server (30) contains an identifier software agent (34) designed to be executed by the Central Processing Unit (32) for identifying a key index (61) from a risk parameter extracted from said transaction data (80) or specific to previous payment transactions, said key index (61) reflecting a cardholder verification method (71), **in that** the checking server (30) contains a verifier software agent (35) designed to be executed by the Central Processing Unit (32) for checking that said key index (61) and said seed (51) are linked by a predefined mathematical function, and **in that** said verifier software agent (35) is configured to consider the payment key (41) used in a payment transaction is compliant with a cardholder verification method (71) in case of successful checking.

9. The checking server (30) according to claim 8, wherein the payment key (41) belongs to a keyset (90) comprising a preset number of payment keys and wherein the predefined mathematical function is "seed modulo preset number is equal to key index".

10. The checking server (30) according to claim 8, wherein the checking server (30) contains an authenticator software agent (36) designed to be executed by the Central Processing Unit (32) for authenticating the cryptogram (82) using the payment key (41).

11. A generator server (10) including an Operating System (11), a Central Processing Unit (12) and a storage area (13), said generator server (10) being adapted for generating a keyset (90) comprising a preset number of payment keys (41, 42),
**characterized in that** the generator server (10) contains a generating software agent (14) designed to be executed by the Central Processing Unit (12) for generating each payment key (41, 42) of said keyset (90) by identifying a key index (61, 62) uniquely allocated to a cardholder verification method (71, 72), initializing a seed (51, 52) so that said key index (61, 62) and said seed (51, 52) are linked by a predefined mathematical function, and deriving the payment key (41, 42) from said seed (51, 52) .

12. A payment device (20) including an Operating System (21), a Central Processing Unit (22), a storage area (23) and a software payment application (24), said payment device (20) including a keyset (90) comprising a preset number of payment keys (41, 42), said software payment application (24) being configured to generate transaction data (80) reflecting a payment transaction, said transaction data (80) including an amount (81), a seed (51) and a cryptogram (82) computed from a target payment key,
**characterized in that** the software payment application (24) is designed to be executed by the Central Processing Unit (22) for identifying a key index (61) from a risk parameter relating to either said transaction data (80) or to previous payment transactions, **in that** the software payment application (24) is designed to select a key index (61) reflecting a cardholder verification method (71), and for selecting as target payment key a payment ley (41) corresponding to the key index (61) in the keyset (90), **in that** said payment key (41) has been derived from a seed (51) and **in that** said key index (61) and said seed (51) are linked by a predefined mathematical function.

13. The payment device (20) according to claim 12, wherein the predefined mathematical function is "seed modulo preset number is equal to key index".

14. The payment device (20) according to claim 12, wherein said payment device (20) including a host card emulation framework and wherein the software payment application (24) is a HCE application.
